# EUROPEAN PATENT APPLICATION

(11) **EP 2 871 207 A1**
(43) Date of publication of application: **13.05.2015**
(21) Application number: 14460072.3
(22) Date of filing: 20.10.2014
(51) Int. Cl.: C08J 9/00, C08G 18/06

(54) **Polyurethane foam nanocomposite and a method of its obtaining**

(30) Priority: 22.10.2013 PL 40572913
(71) Applicant: Politechnika Gdanska, 80-233 Gdansk (PL)
(72) Inventor: Piszczyk, Lukasz, 80-107 Gdansk (PL); Haponiuk, Józef, 80-344 Gdansk (PL); Strankowski, Michal, 80-177 Gdansk (PL); Danowska, Magdalena, 80-266 Gdansk (PL); Strankowska, Justyna, 80-177 Gdansk (PL)

(57) **Abstract**

The method of obtaining polyurethane foam nanocomposites with the use of graphene oxide or its reduced form is characterized in that 0.01-30 parts by weight of graphene nanofiller are added to polyol premix containing 1-90 parts by weight of polyetherols and/or polyestrols with a molecular weight between 400 and 150 000 g/mol, a hydroxyl number ranging from 10 to 700 mg KOH/g, and the functionality of 2-6; 0.01-15 parts by weight of surfactant; 0.01-10 parts of amine and organometallic catalysts; and 0.01-20 parts of environment-friendly porophore. Such obtained premix is homogenized at a temperature between 10 and 90 °C and the stirring rate up to 10000 rpm for 3 hrs in an ultrasound bath, preferably at 20 kHz. Next, the mixture is mixed with isocyanate agent in the amount corresponding to the value of IC index between 0.6 and 3.

Polyurethane foam nanocomposites obtained according to the aforementioned method are also the object of the invention.

## Description

The object of the invention is polyurethane foam nanocomposite obtained with graphene oxide or its reduced form and characterized by reduced flammability and unique performance properties, and the method of generation of the said polyurethane foam nanocomposite.

Graphene is a two-dimensional sheet of sp² carbon with a bond length of 0.142nm. Its crystallographic network has a shape of honeycomb. Graphene is obtained by micromechanical peeling of graphite, chemical deposition from gas phase onto catalytic carriers, thermal decomposition of SiC, reduction of graphite oxide via thermal decomposition and reduction with hydrogen, and by exfoliation reactions.

Graphene is characterized by very high thermal conductivity ranging from 4840 to 5300 W/mK, slight resistance, and almost total transparency (it absorbs 2.3% of light). It is 100 times stronger than steel of the same thickness. Graphene displays good elasticity because it retains its continuous structure at 20% elongation. Membranes made of graphene oxide are gas-tight, while at the same time they are fully water-permeable. This allows for using the graphene membrane filters at room temperature.

Graphene oxide (GO) is rich in oxygen groups and has a layered structure. This material is generated via controlled oxidation of different forms of graphite. Graphene oxide consists of unmodified graphite areas intertwined with carbon atoms that contain hydroxyl and epoxy groups [17]

Graphene oxide is obtained via chemical reaction of graphite. The most commonly used method is Hummers method, which is based on dissolution of the salt of nitric(V) acid in sulphuric(VI) acid in the presence of added potassium permanganate [6].

Polymeric nanocomposites consist of polymeric matrix in which the nanofiller particles are homogeneously dispersed. Depending on the nanofiller dimensions, three types of nanofillers have been distinguished as follows:
- all three dimensions of the nanofiller particle equal less than 100 nanometres (e.g. silicon dioxide)
- only two dimensions of the nanofiller particle equal less than 100 nanometres (e.g. nanotubes)
- nanocomposites in which only one dimension does not exceed 100 nanometres (e.g. phyllosilicates).
There are three main methods for generating polymeric nanocomposites:
- *in situ* polymerization
- solution mixing method
- thermoplastic melt mixing, most frequently by using an extruder.

*In situ* polymerization is mainly used for obtaining thermoset polymer composites. This method consists of two steps, i.e. step 1 based on the permeation of liquid monomer between the nanofiller layers, and step 2 involving the polymerization process, which also takes place between the nanofiller layers.

Solution mixing method comprises three steps, as follows:
- preparation of the dispersion of modified nanofiller in solvent, which will permeate between the nanofiller layers and therefore increase the distance between them
- dissolution of polymer in the same solvent followed by mixing it with the dispersion prepared in step 1
- solvent evaporation and drying of the obtained nanocomposite.

Thermoplastic melt mixing method is based on mixing nanofiller with a plasticized polymer. Experimental trials demonstrated that at the stage involving the addition of nanofillers to thermoplasts the devices such as, co-rotating twin-screw extruder, thermoplastic press and static mixer can be used which secure sufficient shearing forces necessary for a complete dispersion of nanofiller.

In the published work (Khan U. et al.; Carbon 2010, 48, p. 4035-4041), the authors reported on obtaining polyurethane nanocomposites containing graphene sheets. The nanofiller was added to polyurethane matrix in the form of graphene dispersion in dimethylformamide. Such obtained systems were characterized by means of specialized research methods, i.e. TEM, DSC and XRD.

In another scientific publication (Kim H., et al., Chemistry of materials 2010, 22, p. 3441-3450), the authors investigated the effect of graphene oxide and its reduced form on the properties of thermoplastic polyurethanes.

Nguyen D.A. et. al. (Nguyen D.A. et. al. Polymer International 2009, 58, 412-417) obtained thermoplastic polyurethanes which were consequently modified with graphene containing functional groups. Such nanocomposite was characterized by electric conductivity at the level of 10⁻⁴ Scm⁻¹ and better strength compared to the reference material.

The invention relates to a design of polyurethane foam nanocomposites modified with graphene oxide or its reduced form; the said nanocomposites will be characterized by unique performance properties. The method of obtaining such polyurethane foam nanocomposites is also the object of the invention.

In order to obtain polyurethane foam nanocomposites with unique properties according to the invention, 1-90 parts by weight of polyetherols, polyesters, or a mixture of both these compounds are mixed with 0.01-15 parts by weight of surfactant, 0.01-10 parts of amine or organometallic catalyst, 0.01-30 parts of nanofiller, and isocyanate agent in the amount corresponding to the value of IC index between 0.8 to 3.

The advantage of new polyurethane foams with unique characteristics is the use of polyestrols with a molecular weight ranging from 400 to150 000 g/mol, a hydroxyl number from 10 to 700 mg KOH/g, and the functionality of 2-6; or polyetherols with a molecular weight ranging from 400 to150 000 g/mol, a hydroxyl number from 10 to 700 mg KOH/g, and the functionality of 2-6; or a mixture of these two compounds; environment-friendly foaming agent in the form of low-boiling-point hydrocarbons, water or a mixture of both; and the mixture of amine (mainly tertiary amines) and organometallic (mainly organotin) catalysts. In order to obtain polyurethane foams, preferabl 4,4'-diphenylmethane diisocyanate (MDI), polymeric 4,4'-diphenylmethane diisocyanate (pMDI), 2,4- or 2,6-toluene diisocyanate (TDI), and 1,6-hexamethylene diisocyanate (HDI) are used as isocyanate agents. The advantage of polyurethane foams according to the invention is the possibility to generate materials with desired performance characteristics and to use water in the foaming process; the reaction between water and isocyanate agent results in cross-linking of the foam, or carbon dioxide formation, or hydrophobic porophores, pentane and its derivatives as well as the mixture of the aforementioned foaming agents. The main advantage of new polyurethane foam nanocomposites with unique characteristics is the use of graphene oxide or reduced graphene oxide in the range from 0.01 to 30 parts by weight. The application of nanofillers for obtaining polyurethane foams significantly improves their performance characteristics.

Polyurethane foam nanocomposite, being a product of the reaction between isocyanate agent and polyol premix, according to the invention is characterized in that polyol premix contains from 1 to 90 parts by weight of polyetherols and/or polyestrols with a molecular weight between 400 and 150 000 g/mol, a hydroxyl number from 10 to 700 mg KOH/g, and the functionality from 2 to 6; 0.01-15 parts by weight of surfactant; 0.01-10 parts of amine and organometallic catalysts; 0.01-20 parts of environment-friendly porophore; and 0.01-30 parts by weight of nanofiller. The homogenized dispersion of graphene oxide or reduced graphene oxide in polar or non-polar solvents serves as nanofiller. Isocyanate agent is added in the amount corresponding to the value of IC index between 0.6 and 3.

In another variant of the foam according to the invention, graphene oxide or reduced graphene oxide is dispersed in water, tetrahydrofuran, dimethylformamide or acetone.

The method of obtaining polyurethane foam nanocomposites, which involves the preparation of polyol premix containing polyestrols and/or polyetherols, surfactant, amine or organometallic catalysts, environment-friendly porophores, and nanofiller, followed by the reaction of the said premix with isocyanate agent, is characterized according to the invention in that the polyol premix is prepared by using a know method. The polyol premix contains 1-90 parts by weight of polyetherols and/or polyestrols with a molecular weight between 400 and 150 000 g/mol, a hydroxyl number ranging from 10 to 700 mg KOH/g, and the functionality of 2-6; 0.01-15 parts by weight of surfactant; 0.01-10 parts of amine and organometallic catalysts; 0.01-20 parts environment-friendly porophore. From 0.01 to 30 parts by weight of graphene nanofiller are added to the premix. Such obtained premix is homogenized at a temperature between 10 and 90 °C and the stirring rate up to 10000 rpm for 3 hrs in an ultrasound bath, preferably at 20 kHz. Next, the mixture is mixed with isocyanate agent in the amount corresponding to the value of IC index between 0.6 and 3.
In the variant of the method according to the invention, graphene nanofiller is added to isocyanate agent.

In another variant of the method according to the invention, graphene nanofiller in the form of graphene oxide and/or reduced graphene oxide, preferably in the form of dispersion in polar or non-polar solvent, preferably in water, tetrahydrofuran, dimethylformamide or acetone.

Polyurethane foam nanocomposites according to the invention are characterized by reduced flammability and thermal stability.

The invention is described further in the examples of method implementation below.

Example 1. The dispersion of graphene oxide was prepared as follows: 15 ml of water was added to the appropriate amount of graphene oxide, and the mixture was homogenized for 1 hr with a mechanical stirrer in a water bath at 30 °C. Next, the obtained solution was added to the polyol component, and the mixture was homogenized under a vacuum at 90 °C until the nanofiller had properly dispersed in the entire volume of the solution and the water had been completely removed from the system. Such prepared dispersion was mixed with the remaining substrates.

Example 2. The dispersion of graphene oxide was prepared as follows: 15 ml of acetone was added to the appropriate amount of graphene oxide, and the mixture was homogenized for 1 hr with a mechanical stirrer in a water bath at a temperature between 25 and 30 °C. Next, the obtained solution was added to the polyol component, and the mixture was homogenized under a vacuum at the temperature range 50-90 °C until the nanofiller had properly dispersed in the entire volume of the solution and acetone had been completely removed from the system. Such prepared dispersion was mixed with the remaining substrates.

Example 3. The dispersion of graphene oxide was prepared as follows: 15 ml of dimethylformamide was added to the appropriate amount of graphene oxide, and the mixture was homogenized for 1 hr with a mechanical stirrer in a water bath at a temperature between 25 and 60 °C. Next, the obtained solution was added to the polyol component, and the mixture was homogenized under a vacuum at the temperature range 50-100 °C until the nanofiller had properly dispersed in the entire volume of the solution and dimethyloformamide had been completely removed from the system. Such prepared dispersion was mixed with the remaining substrates.

Example 4. The dispersion of graphene oxide was prepared as follows: the appropriate amount of graphene oxide was added to the polyol with a hydroxyl number L_{OH}=53-59 mg KOH/g, and the mixture was homogenized for 1 hr with a mechanical stirrer in a water bath at a temperature between 25 and 60 °C. Next, the obtained solution was added to the remaining polyols, and the mixture was homogenized at a temperature between 25 and 100 °C until the nanofiller had properly dispersed in the entire volume of the solution. Such prepared dispersion was mixed with the remaining substrates.

Example 5. Elastic polyurethane foam nanocomposite was prepared as follows: 44 parts by weight of polyol with a hydroxyl number L_{OH}=53-59 mg KOH/g and a molecular weight of 3000 were mixed with 21 parts of polyol with a hydroxyl number L_{OH}=30-36 mg KOH/g and a molecular weight of 5000; 0.5 parts of amine catalyst Dabco 33 LV; 0.2 parts of organotin catalyst; and 1.3 parts of surfactant (silicone oil SC-246). The mixture was thoroughly mixed and then 2.4 parts by weight of water was added. Graphene oxide in the amount of 0.1 parts by weight was added as a modifier of performance characteristics. Such prepared polyol premix was homogenized for 2 hrs in an ultrasound bath. Next, 28 parts by weight of isocyanate agent (pMDI) were added, and the mixture was mixed for 10 sec.

Example 6. Elastic polyurethane foam nanocomposite was prepared as follows: a dispersion containing 1 part by weight of graphene oxide and 44 parts by weight of polyol with a hydroxyl number L_{OH}=53-59 mg KOH/g and a molecular weight of 3000 was mixed with 21 parts of polyol with a hydroxyl number L_{OH}=30-36 mg KOH/g and a molecular weight of 5000; 0.5 parts of amine catalyst Dabco 33 LV; 0.2 parts of organotin catalyst; and 1.3 parts of surfactant. The mixture was thoroughly mixed and then 2.4 parts by weight of water was added. Such prepared polyol premix was homogenized for 2 hrs in an ultrasound bath. Next, 28 parts by weight of isocyanate agent (pMDI) were added to the system, and the mixture was mixed for 10 sec.

The name Dabco 33 LV used in the above examples indicates a 33% solution of 1,4-diazabicyclo[2.2.2]octane in ethylene glycol.

## Claims

1. Polyurethane foam nanocomposite, being the product of the reaction between isocyanate agent and polyol premix, **characterized in that** the said polyol premix contains 1-90 parts by weight of polyetherols and/or polyestrols with a molecular weight between 400 and 150000 g/mol, a hydroxyl number from 10 to 700 mg KOH/g, and the functionality of 2-6; 0.01-15 parts by weight of surfactant; 0.01-10 parts by weight of amine and organometallic catalysts; 0.01-20 parts by weight of environment-friendly porophore; 0.01-30 parts by weight of nanofiller in the form of homogenized dispersion of graphene oxide or reduced graphene oxide in polar or non-polar solvent; and isocyanate agent added in the amount corresponding to IC index between 0.6 and 3.

2. Foam according to claim 1 **characterized in that** water, tetrahydrofuran, dimethylformamide, or acetone is the solvent used for dispersing graphene oxide or reduced graphene oxide.

3. The method of obtaining polyurethane foam nanocomposites via the preparation of polyol premix containing polyestrols and/or polyetherols, surfactant, amine and organometallic catalysts, environment-friendly porophores, and nanofiller, followed by the reaction between the said premix with isocyanate agent **characterized in that** by using a known method the polyol premix containing 1-90 parts by weight of polyetherols and/or polyestrols with a molecular weight between 400 and 150 000 g/mol, a hydroxyl number ranging from 10 to 700 mg KOH/g, and the functionality of 2-6; 0.01-15 parts by weight of surfactant; 0.01-10 parts of amine and organometallic catalysts; 0.01-20 parts environment-friendly porophore is prepared, then from 0.01 to 30 parts by weight of graphene nanofiller are added to the premix and then such obtained premix is homogenized at a temperature between 10 and 90 °C and the preferable stirring rate up to 10000 rpm for 3 hrs in an ultrasound bath, preferably at 20 kHz, next the mixture is mixed with isocyanate agent in the amount corresponding to the value of IC index between 0.6 and 3.

4. Method according to claim 3 **characterized in that** graphene nanofiller is added to isocyanate agent.

5. Method according to claim 3 or claim 4 **characterized in that** graphene oxide and/or reduced graphene oxide nanofiller preferably in the form of dispersion in polar or non-polar solvent, preferably in water, tetrahydrofuran, dimethylformamide or acetone.
